# EUROPÄISCHE PATENTSCHRIFT

(11) **EP 1 447 355 B1**
(45) Veröffentlichungstag und Bekanntmachung des Hinweises auf die Patenterteilung: **16.01.2008**
(21) Anmeldenummer: 03026991.4
(22) Anmeldetag: 26.11.2003
(51) Int. Cl.: B65G 1/137

(54) **Verfahren und Vorrichtung zum automatischen Kommissionieren einer Vielzahl von Aufträgen in Einzelkarton, Lagen oder einer Vielzahl davon**
Method and device for the automatic commissioning of orders in a box, layer or a plurality of them
Méthode et dispositif pour la préparation automatique de commandes dans une ou plusieurs boîtes ou couches

(30) Priorität: 15.02.2003 DE 10306456
(43) Veröffentlichungstag der Anmeldung: 18.08.2004
(73) Patentinhaber: bofrost* Dienstleistungs GmbH und Co. KG, 47638 Straelen (DE)
(72) Erfinder: Horsten, Wolfgang, 47627 Kevelaer (DE); Horsten, Manfred, 47627 Kevelaer (DE); Handrich, Dieter Joachim, 47800 Krefeld (DE)
(74) Vertreter: Tönhardt, Marion

(56) Entgegenhaltungen:
- EP-A- 0 559 604
- DE-A- 2 062 845
- FR-A- 2 514 735
- GB-A- 2 242 419
- GB-A- 2 265 893
- US-A- 4 692 876
- PATENT ABSTRACTS OF JAPAN vol. 014, no. 221 (M-0971), 10. Mai 1990 (1990-05-10) & JP 02 052807 A (KIRIN BREWERY CO LTD), 22. Februar 1990 (1990-02-22)

## Beschreibung

Die Erfindung betrifft ein Verfahren und eine Vorrichtung zum automatischen, parallelen Konunissionieren einer Vielzahl von Aufträgen in Einzelkarton, Lagen oder einer Vielzahl davon, wobei jeder Auftrag aus einer Anzahl von verschiedenartigen Artikeln besteht, die auf mindestens einer Quellpalette artikelrein bereitgestellt werden und auf einer dem Auftrag zugeordneten Zielpalette aufzubauen sind.

Kommissionierungsaufgaben stellen sich vor allem in Dispositionszentren für Stückgut, also im Zwischenhandel, in Verteilzentren oder dergleichen, beispielsweise im chemisch/pharmazeutischen Bereich oder auch im Lebensmittelbereich. Derartige Kommissionierungsaufgaben automatisch zu lösen, ist ein besonderes Anliegen, wenn die Arbeitsbedingungen kritisch sind, große Mengen und schwere Lasten bewältigt werden müssen und beispielsweise wenn Tiefkühlware kommissioniert werden soll. Dieses muß unter Tieftemperaturbedingungen geschehen, damit die Kühlkette nicht unterbrochen wird.

Die DE 42 17 079 A1 beschreibt eine Einrichtung zur selektiven Palettisierung von Gegenständen mit unterschiedlichen Eigenschaften, wie sie typischerweise aus einer Produktion kommen, wobei verschiedene Kartons, die mit Strichcodes markiert sind, über ein Band laufen und dann ausgeschleust werden, um entweder sortenreine Paletten zu erstellen oder Verpackungsfamilien zu bauen. Dies ist also gerade der umgekehrte Vorgang, wie es bei der Kommissionierung von Waren erforderlich ist.

Die GB 2 265 893 verwendet ebenfalls nur einen Roboter, um von einer Quellpalette Artikellagen auf eine Zielpalette umzupacken. Der Roboter ist dabei stationär im System angeordnet und läßt sich die Zielpaletten über ein Transportsystem anfahren.

Nach dem gleichen Prinzip arbeitet das Verfahren, das in der GB 2 242 419 A offenbart ist. Hier ist ein Roboter stationär angeordnet, der für eine Einzelkartonumsetzung auf verschiedene Zielplätze sorgt.

Bei dem Verfahren nach der US-A-4 692 876 wird die Optimierung der Umschlagsleistung für Einzelkartons versucht, indem mehrere Laderoboter vorgesehen werden, um ein vorab von einer Steuervorrichtung erstelltes Packbild zu realisieren. Dabei wird eine Zielpalette an den Robotern entlang geführt. Mit Hilfe einer Steuervorrichtung wird festgelegt, in welcher Reihenfolge Artikel auf der Palette abgelegt werden sollen. Dabei werden Prioritätsregeln für die Beladerichtung beachtet.

Die FR-A-2 514 735 setzt auf ein Bahnhofssystem, beispielsweise als Rundrevolver oder als Straßensystem ausgestaltet, um Artikel lagenweise von einer Quellpalette auf eine Zielpalette umzusetzen. Dazu wird die ausgewählte Quellpalette aus ihrer Warteposition an eine Beladestelle gefahre und, nachdem die Lage auf der Zielpalette abgelegt ist, wieder zurück transportiert.

Die EP-A-0 559 604 befaßt sich mit der Kommissionierung von Einzelaufträgen, wobei von vielen Quellpaletten jeweils zur Zeit eine Zielpalette bedient wird. Die Quellpaletten werden mit Hilfe des Regalbediengeräts in einer bestimmten Reihenfolge einer Kommissionierzelle zugeführt, wobei die nicht mehr benötigten, aber noch belegten Quellpaletten in den Lagerbereich des Hauptlagers bzw. des Kommissionierlagers zurückgeführt werden und gegebenenfalls durch Quellpaletten mit anderen Artikeln ersetzt werden.

Schließlich zeigt PATENT ABSTRACTS OF JAPAN, vol. 014, no. 221 (M-0971) vom 10. Mai 1990 als Zusammenfassung zur JP 02 052 807 A, wie ein Einzelauftrag abgearbeitet wird, indem ein Roboter dann einen Artikel umsetzt, wenn die entsprechende Palette in den Betriebsbereich kommt.

Ein Verfahren zum automatischen Kommissionieren einer Vielzahl von Aufträgen und eine Vorrichtung gemäß dem Oberbegriff des Anspruchs 4 sind aus der DE-A-2 062 845, die als nächstliegender Stand der Technik gesehen wird, bekannt. Dort findet eine sequentielle Bearbeitung der Aufträge statt, indem zunächst eine Lage einer Ware, dort zum Beispiel mit der Lagernummer "4711" auf eine erste Zielpalette abgesetzt wird, dann werden weitere Zielpaletten auftragsgemäß mit eben dieser Ware versehen. Erst nachdem die Verteilung der Ware "4711" abgeschlossen ist, wird eine weitere Quellpalette mit einer anderen Ware, im Beispiel dort "4690", auf die Zielpalette verteilt. Bei diesem Verfahren handelt es sich um eine zweidimensionale Lagenumsetzung, bei der an einem Zwischenspeicherplatz von einer Quellpalette auf die Zielpaletten mit gleichem Lageflächenbild und stringenter Palettenreihenfolge kommissioniert wird.

Es ist daher die Aufgabe der vorliegenden Erfindung, ein Verfahren und eine Vorrichtung zum Kommissionieren einer Vielzahl von Aufträgen bereitzustellen, mit dem bzw. mit der eine automatische Zusammenstellung von Waren auf auftragsbezogenen Paletten im Durchlauf gelingt, ohne daß eine Zwischenablage erforderlich ist.

Diese Aufgabe wird durch ein Verfahren nach Anspruch 1 und eine Vorrichtung nach Anspruch 4 gelöst. Vorteilhafte Ausgestaltungen sind Gegenstand der Unteransprüche.

Erfindungsgemäß ist bei einem Verfahren zum automatischen, parallelen Kommissionieren einer Vielzahl von Aufträgen in Einzelkarton, Lagen oder einer Vielzahl davon, bei dem jeder Auftrag aus einer

Anzahl von verschiedenartigen Artikeln besteht, die auf mindestens einer Quellpalette artikelrein bereitgestellt sind, vorgesehen:

Zunächst wird für jeden Auftrag mindestens eine Zielpalette festgelegt, sodann die Artikel für die festgelegte Zielpalette bestimmt. Es wird ein Packbild der Artikel für die Zielpalette erstellt, wobei die Stapelfähigkeit der Artikel berücksichtigt wird. Nachdem alle Aufträge so bearbeitet sind, werden Quellpaletten für jeden Artikel, der für mindestens einen Auftrag angefordert wird, bereitgestellt, und die Reihenfolge der Quellpaletten wird festgelegt, wobei die Reihenfolge mit der Randbedingung festgelegt wird, daß für jede Zielpalette bestimmt wird, welche Quellpalette leer oder zur einzigen Anbruchpalette wird, und daß für jede nicht leer gewordene Quellpalette bestimmt wird, ob sie von weiteren Zielpaletten gebraucht wird. Auf diese Weise werden unnötige Quellpaletten aus dem Verfahren herausgenommen. Vorzugweise wird sichergestellt, daß jede Quellpalette dem System nur einmal zur Verfügung gestellt wird.

Die dem System zugrundeliegende Software sorgt Vorzugsweise dafür, daß das Depalettieren und das Palettieren in einem Arbeitsgang erfolgt. Das Packbild wird für die Zielpalette insgesamt erstellt und somit nicht nur lagenweise. Damit wird vermieden, daß eine Zwischenablage in Tablarlägem erforderlich ist, in denen nach dem Depalettieren die Artikel auf einem Tablett abgelegt werden und dort sortiert werden, bevor sie wieder palettiert werden. Ferner wird die Zahl der Transporte von Paletten unterbunden.

Manuelle Eingriffe in das System sind zwar zulässig, jedoch nicht erwünscht. Wenn überraschenderweise beispielsweise der Artikel nicht vorliegt, kann dieser innerhalb der Auftragsabarbeitung "manuell genullt" werden. Das System sorgt aber auch für eine Vorverfügbarkeitsprüfung der Waren.

Für mindestens zwei Greifroboter werden erfindungsgemäß Aufnahme- und Ablegebewegungen definiert, um die erforderlichen Artikel von der entsprechenden Quellpalette gemäß den Aufträgen zu den zugeordneten Zielpaletten zu überführen, dann werden die für die Aufträge definierten Aufnahme- und Ablegebewegungen durch die mindestens zwei Greifroboter, die gleichzeitig auf sich überschneidenden Bereichen arbeiten, ausgeführt.

Bevorzugt ist es, wenn die Artikel von den Quellpaletten lagenweise zu einer ausgewählten Zielpalette überführt werden. Dies erleichtert auch die Erstellung von Packbildern.

Weiter ist es günstig, die Anordnung der Zielpaletten derart zu optimieren, daß Zielpaletten, welche gleichartige Artikel anfordern, möglichst weit auseinanderliegend angeordnet werden. Hierdurch wird die Leistung der mechanischen Komponenten optimiert. Es hat sich herausgestellt, daß die Roboter sonst die langsamste Komponente bilden. Die Software optimiert vor der eigentlichen Auftragsbearbeitung die Aufstellung der Zielpaletten.

Eine erfindungsgemäße Vorrichtung zum automatischen, parallelen Kommissionieren von Aufträgen in Einzelkarton, Lagen oder einer Vielzahl davon, die insbesondere zum Durchführen des erfindungsgemäßen Verfahrens geeignet ist, umfaßt mindestens zwei Greifroboter für die Artikel, eine Vielzahl von Plätzen für die Zielpaletten, wobei jedem Auftrag mindestens eine Zielpalette mit einem entsprechend dem Auftrag vorgegebenen Packbild zugewiesen ist, und eine Einrichtung, mit der die in einer vorgegebenen Reihenfolge geordneten Quellpaletten relativ zu den Zielpaletten verfahren werden. Dabei führen mindestens zwei Greifroboter vordefinierte Aufnahme- und Ablegebewegungen durch, um die erforderlichen Artikel von der entsprechenden Quellpalette entsprechend jedem Auftrag zu den zugeordneten Zielpaletten zu überführen.

Die mindestens zwei Greifroboter arbeiten gleichzeitig auf sich überschneidenden Bereichen, wobei die Trennung der Arbeitsbereiche der Greifroboter softwaregesteuert erfolgt. Es ist zu beachten, daß für manche Anwendungen die Tiefkühltauglichkeit der Komponenten gewährleistet sein muß. Daher sind bei Einsätzen bis zu -30°C Knickarmroboter nicht geeignet. Das Arbeiten in überschneidenden Bereichen ist neben der Anzahl der Roboter ein entscheidendes Leistungskriterium. Grundsätzlich ließe sich das erfindungsgemäße Verfahren auch ohne überschneidende Bewegungen führen, es wäre dann allerdings sehr langsam.

Mit der Erfindung ist ein direktes Kommissionieren ohne Zwischenschritte, wie Fach- oder Bandablagen, von Quellpalette auf Zielpalette möglich. Wenn lagenweise kommissioniert wird, können bei derzeit erprobten Systemen etwa 250 verschiedene Artikel bearbeitet werden, die Verwaltung größerer Anzahlen verschiedener Artikel hängt von der Anzahl Zielplätze und der Anzahl Roboter ab und ist grundsätzlich nicht beschränkt. Ebenso ist die Anzahl der Zielpaletten pro Auftrag nicht beschränkt. Bei verschiedenartigen Artikeln in der Größenordnung von 250 kann mit etwa 70 unterschiedlichen Lagenbildem gearbeitet werden, die zu Packbildem aufgebaut werden, wobei auch hier Erweiterungsmöglichkeiten bestehen.

Es hat sich gezeigt, daß bei wahlfreier Auftragszusammenstellung innerhalb der etwa 250 Artikel bei vorgegebener Kommissionierreihenfolge der Artikel pro Auftrag unter Berücksichtigung von Stapelkriterien mindestens 24 Aufträge parallel abgearbeitet werden können. Stapelkriterien können dabei die Anordnung der Artikel in einer Lage sein, etwaige Freiflächen in der Lage, bestimmte Flächenmaße der Lage, unterschiedliche Gewichte und dergleichen.

Die Zielpaletten können je nach Vorgabe unterschiedlich bis etwa 2,20 m hoch gestapelt werden.

Die Erfindung ermöglicht es, daß jede Quellpalette nur einmal vom Lager angedient wird, also nicht in einer Schleife geführt wird. Es verbleibt maximal eine Anbruchpalette, die also nicht vollständig aufgebraucht ist, pro Artikel.

Es handelt sich um ein automatisches Kommissionierverfahren für die auftragsbezogene Kommissionierung, unter Berücksichtigung von Paletten- und Lagenbildem mit großer Mengenbewältigung.

Das heißt, es werden sortenreine Paletten zugeführt und automatisch auftragsbezogene Mischpaletten erstellt.

Im folgenden soll die Erfindung anhand der beigefügten Zeichnung näher erläutert werden. Es zeigt
- Figur 1: eine schematische Darstellung einer erfindungsgemäßen Vorrichtung zum automatischen Kommissionieren einer Vielzahl von Aufträgen; und
- Figur 2: ein Beispiel eines Entscheidungsbaumes für die Optimierung beim erfindungsgemäßen Verfahren.

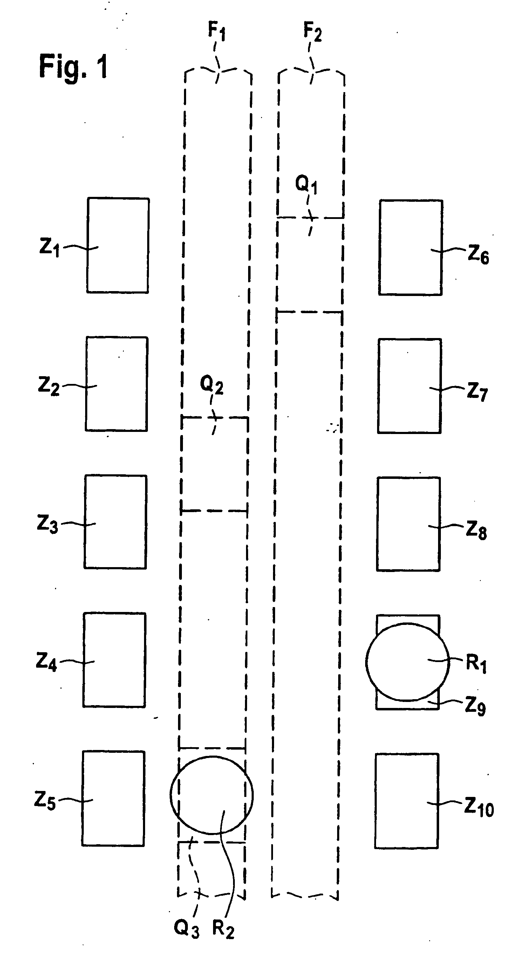

Bei der erfindungsgemäßen Vorrichtung zum automatischen Kommissionieren einer Vielzahl von Aufträgen, wie sie in Figur 1 schematisch dargestellt ist, stehen Zielpaletten Z₁, Z₂, ..., Zₙ im System. Im Beispiel sind zehn Zielpaletten dargestellt, obwohl die Anzahl darauf nicht beschränkt ist. Die Zielpaletten Z₁, Z₂, ..., Zₙ sind auf beiden Seiten eines Fördersystems F₁, F₂ angeordnet, auf dem die Quellpaletten Q₁, Q₂, ..., Qₘ fahren. Im Beispiel sind wiederum nur drei Quellpaletten dargestellt, obwohl eine größere Anzahl möglich ist. Auch kann das hier verwendete zweibahnige Flußkonzept auf k Bahnen erweitert werden. Es sind Greifroboter R₁, R₂ gezeigt, die dafür sorgen, daß Artikel auftragsgemäß von den Quellpaletten Q₁, Q₂, ..., Qₘ zu den Zielpaletten Z₁, Z₂, ..., Zₙ überführt werden. Auch die Anzahl der Greifroboter ist nicht auf zwei beschränkt und kann R₁, R₂, ..., Rₖ betragen.

Es ist auch denkbar, ein drittes Förderband oder mehrere Förderbänder bis Fₖ bzw. Fördersystem(e) zwischen den Fördersystemen F₁ und F₂ anzuordnen, um die Vorrichtung zu verkürzen. Die Zielpaletten können längs wie quer angeordnet werden.

In einer praktischen Ausgestaltung sind die Greifroboter R₁, R₂ ..., Rₖ Portalroboter mit Greifköpfen für jeweils eine Artikellage, und es kann je nach Anzahl der Plätze für die Zielpaletten die Zahl der Portalroboter vergrößert werden. Jeder Greifkopf weist eine Vakuumsaugerplatte und Seitenkanalverdichter auf, so daß Lagen mit Freiflächen bis zu 35 % gehandhabt werden können. Die Lagenvermessung erfolgt über Seitenbacken und mit Hilfe optischer Wegmessung, bevorzugt aber über induktive Messsysteme mit Meßwegaufnehmer, die auch in tiefkühltauglicher Ausgestaltung zur Verfügung stehen. Gegenüber der optischen Messung ist die induktive genauer, da hier Verfälschungen beispielsweise durch Reflexionien und verbeulte Kartons, ausgeschlossen werden.

Der Greifkopf ist mit einer automatischen Lagenkorrektur ausgestattet, damit Abweichungen von der Quellpalette ausgeglichen werden können. Die automatischen Korrekturen können beispielsweise über optische oder mechanische Detektierung oder softwaretechnisch erfolgen. Der Ausgleich erfolgt in Schritten. Wenn mehr als 100 mm Fehlstand festgestellt werden, korrigiert der Roboter automatisch seine Position. Die Detektierung erfolgt bevorzugt über mechanische Backensysteme, da eine optische Vermessung nur über Bildbearbeitungssysteme möglich wäre. Korrekturen unter 100 mm werden hingegen vorteilhaft softwaretechnisch ausgeglichen. Die neue Position der Lage wird berechnet, und sie wird dann mittig auf die.darunterliegende Lage gepackt. Die Nutzlast pro Roboter beträgt beispielsweise 150 kg. Die Greifroboter R₁, R₂, ..., Rₖ arbeiten gleichzeitig in voll überschneidenden Bereichen, die durch Softwaresteuerung getrennt werden.

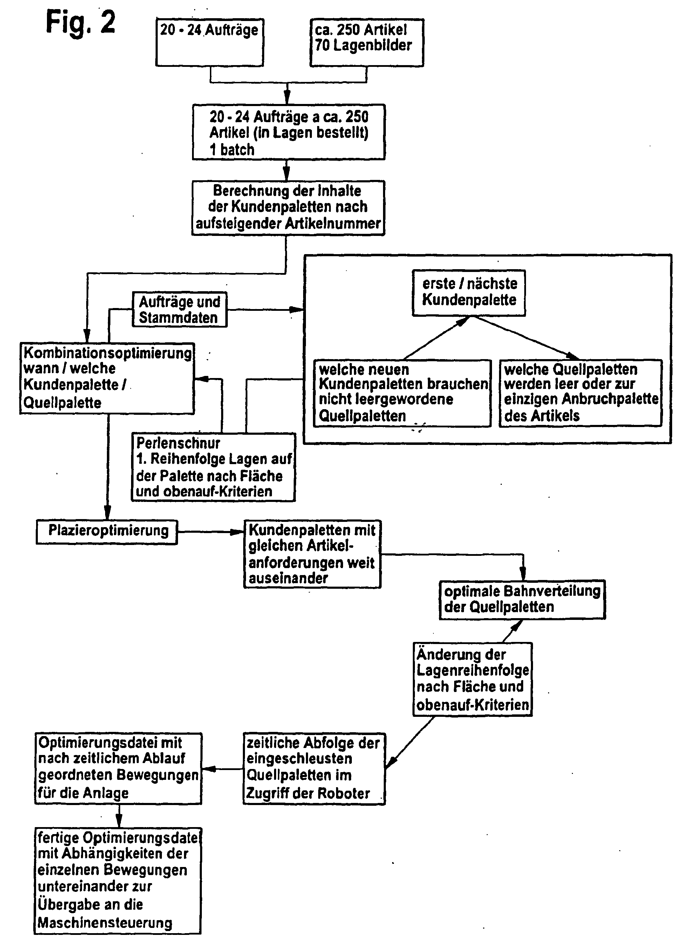

Figur 2 zeigt einen Entscheidungsbaum für die Optimierung bei der Kommissionierung einer Vielzahl von Aufträgen. Im Beispiel werden 20 - 24 Aufträge behandelt, die aus etwa 250 Artikeln bestehen, welche in Lagen bestellt werden und damit auch so bereitzustellen sind. Für die etwa 250 Artikel stehen etwa 70 Lagenbilder zur Verfügung.

Zunächst erfolgt eine Berechnung der Inhalte der Zielpaletten oder Kundenpaletten nach aufsteigender Artikelnummer, woraufhin eine Kombinationsoptimierung vorgenommen wird. Anhand der Aufträge und Stammdaten wird für jede Zielpalette ermittelt, welche Quellpaletten leer werden oder zur einzigen Anbruchpalette des Artikels werden. Andererseits wird für nicht leer gewordene Quellpaletten überprüft, für welche neuen Zielpaletten sie benötigt werden. Daraus ergibt sich eine "Perlenschnur" aus Quellpaletten.

Die Reihenfolge der Lagen auf der Zielpalette wird nach Fläche und Obenaufkriterien festgelegt. Damit ist die Anordnung von Zielpaletten weitgehend vorgegeben, so daß eine Plazieroptimierung erfolgen kann. Vorteilhaft werden Kundenpaletten mit gleichen Artikelanforderungen weit auseinandergelegt. Dann wird die Verteilung der Quellpaletten auf die Flußbahnen optimiert. Dabei ist es möglich, die Lagenreihenfolge gegebenenfalls noch zu ändern, wobei wieder Fläche und Obenaufkriterien zu berücksichtigen sind. Dieses erfolgt in Rückkopplung mit der zeitlichen Abfolge der eingeschleusten Quellpaletten im Zugriff der Greifroboter. Aus der gesamten Information wird eine Optimierungsdatei erstellt, die den zeitlichen Ablauf der Bewegungen für die erfindungsgemäße Vorrichtung mit sich bewegenden Quellpaletten und Greifrobotern enthält. Diese fertige Optimierungsdatei wird schließlich in Abhängigkeit der einzelnen Bewegungen untereinander an die Maschinensteuerung übergeben.

Bei der Erfindung wird die sonst übliche Zwischenlagerung komplett durch Logik ersetzt, weder ist ein Zwischenbahnhof erforderlich, noch kreist Ware im System.

Zweckmäßigerweise ist das System so gestaltet, daß die Zielpaletten stehen und die Quellpaletten fahren. So ist ein problemloser Batchbetrieb möglich. Es kann aber auch daran gedacht werden, auch die Zielpaletten relativ langsam in bezug auf die Quellpaletten fahren zu lassen, um das erfindungsgemäße Verfahren kontinuierlich ablaufen zu lassen.

## Patentansprüche

1. Verfahren zum automatischen, parallelen Kommissionieren einer Vielzahl von Aufträgen in Einzelkarton, Lagen oder einer Vielzahl davon, bei dem jeder Auftrag aus einer Anzahl von verschiedenartigen Artikeln besteht, die auf mindestens einer Quellpalette (Q₁-Q₃) artikelrein bereitgestellt werden und auf einer dem Auftrag zugeordneten Zielpalette (Z₁-Z₁₀) aufzubauen sind, mit den Schritten:
a) für jeden Auftrag
- Festlegen mindestens einer Zielpalette (Z₁-Z₁₀);
- Bestimmen der Artikel für die festgelegte Zielpalette (Z₁-Z₁₀);
- Erstellen eines Packbildes der Artikel für die Zielpalette (Z₁-Z₁₀), wobei die Stapelfähigkeit der Artikel durch Stapelkriterien berücksichtigt wird, welche die Anordnung der Artikel in einer Lage, Freiflächen in der Lage, Flächenmaße der Lage und unterschiedliche Gewichte umfassen;
b) Bereitstellen von Quellpaletten (Q₁-Q₃) für jeden Artikel, der für mindestens einen Auftrag angefordert wird;
c) Festlegen einer Reihenfolge von Quellpaletten (Q₁-Q₃), die mit der Randbedingung festgelegt wird, daß
für jede Zielpalette (Z₁-Z₁₀) bestimmt wird, welche Quellpalette (Q₁-Q₃) leer oder zur einzigen Anbruchpalette wird, und daß für jede nicht leer gewordene Quellpalette (Q₁-Q₃) bestimmt wird, ob sie von weiteren Zielpaletten (Z₁-Z₁₀) gebraucht wird;
d) Definieren von Aufnahme- und Ablegebewegungen mindestens zweier Greifroboter (R₁, R₂) um die erforderlichen Artikel von der entsprechenden Quellpalette, (Q₁-Q₃) gemäß den Aufträgen zu den zugeordneten Zielpaletten (Z₁-Z₁₀) zu überführen, wobei die mindestens zwei Greifroboter (R₁, R₂) gleichzeitig auf sich überschneidenden Bereichen arbeiten, deren Trennung softwaregesteuert erfolgt;
e) Durchfuhren der für die Aufträge definierten Aufnahme- und Ablegebewegungen durch die mindestens zwei Greifroboter (R₁, R₂).

2. Verfahren nach Anspruch 1, **dadurch gekennzeichnet, daß** die Artikel von den Quellpaletten (Q₁-Q₃) lagenweise zu einer ausgewählten Zielpalette (Z₁-Z₁₀) überführt werden.

3. Verfahren nach Anspruch 1 oder 2, **dadurch gekennzeichnet, daß** die Anordnung der Zielpaletten (Z₁-Z₁₀) derart optimiert wird, daß Zielpaletten Z₁-Z₁₀, welche gleichartige Artikel anfordern, möglichst weit auseinanderliegend angeordnet werden.

4. Vorrichtung zum automatischen, parallelen Kommissionieren einer Vielzahl von Aufträgen in Einzelkarton, Lagen oder einer Vielzahl davon, bei der jeder Auftrag aus einer Anzahl von verschiedenartigen Artikeln besteht, die auf mindestens einer Quellpalette (Q₁-Q₃) artikelrein bereitgestellt werden und auf mindestens einer dem Auftrag zugeordneten Zielpalette (Z₁-Z₁₀) aufzubauen sind, insbesondere zum Durchführen des Verfahrens nach einem der Ansprüche 1 bis 3, mit
- mindestens zwei Greifrobotern (R₁, R₂), die vordefinierte Aufnahme- und Ablegebewegungen durchführen, um die erforderlichen Artikel von der entsprechenden Quellpalette entsprechend jedem Auftrag zu den zugeordneten Zielpaletten (Z₁-Z₁₀) zu überführen ;
- einer Vielzahl von Plätzen für die Zielpaletten (Z₁-Z₁₀) wobei jedem Auftrag mindestens eine Zielpalette (Z₁-Z₁₀) mit einem entsprechend dem Auftrag vorgegebenen Packbild zugewiesen ist;
- einer Einrichtung, mit der die in einer vorgegebenen Reihenfolge geordneten Quellpaletten (Q₁-Q₃) relativ zu den Zielpaletten (Z₁-Z₁₀) verfahren werden;
**dadurch gekennzeichnet, dass** die mindestens zwei Greifroboter (R₁, R₂) gleichzeitig auf sich überschneidenden Bereichen arbeiten, die durch Softwaresteuerung getrennt sind.

## Claims

1. Method which is intended for the automatic, parallel order-picking of a multiplicity of orders in individual boxes, layers or a multiplicity thereof and in the case of which each order comprises a number of different types of article which are provided on at least one source pallet (Q₁-Q₃), carrying articles of a single type, and can be built up on a target pallet (Z₁-Z₁₀) assigned to the order, the method having the following steps:
a) for each order
- defining at least one target pallet (Z₁-Z₁₀);
- determining the articles for the target pallet (Z₁-Z₁₀) defined;
- preparing an article-packing formation for the target pallet (Z₁-Z₁₀), account being taken of the stacking capability of the articles by stacking criteria including the arrangement of the articles in a layer, free surface areas in the layer, surface-area dimensions of the layer and different weights;
b) providing source pallets (Q₁-Q₃) for each article which is required for at least one order;
c) defining a sequence of source pallets (Q₁-Q₃) using the boundary condition that it is determined for each target pallet (Z₁-Z₁₀) which source pallet (Q₁-Q₃) is emptied or is the single partially used pallet, and that, for each source pallet (Q₁-Q₃) which has not been emptied, it is determined whether it will be used for further target pallets (Z₁-Z₁₀) ;
d) defining receiving and depositing movements of at least two gripping robots (R₁, R₂) in order to transfer the necessary articles, in accordance with the orders, from the corresponding source pallet (Q₁-Q₃) to the associated target pallets (Z₁-Z₁₀), the at least two gripping robots (R₁, R₂) operating simultaneously in overlapping regions, the separation of which is controlled by software;
e) executing the order-defined receiving and depositing movements by the at least two gripping robots (R₁, R₂).

2. Method according to Claim 1, **characterized in that** the articles are transferred in layers from the source pallets (Q₁-Q₃) to a selected target pallet (Z₁-Z₁₀).

3. Method according to Claim 1 or 2, **characterized in that** the arrangement of the target pallets (Z₁-Z₁₀) is optimized such that target pallets (Z₁-Z₁₀) which require the same type of articles are arranged as far apart as possible from one another.

4. Apparatus which is intended for the automatic, parallel order-picking of a multiplicity of orders in individual boxes, layers or a multiplicity thereof and in the case of which each order comprises a number of different types of article which are provided on at least one source pallet (Q₁-Q₃) , carrying articles of a single type, and can be built up on at least one target pallet (Z₁-Z₁₀) assigned to the order, in particular for implementing the method according to one of Claims 1 to 3, having
- at least two gripping robots (R₁, R₂) which execute predefined receiving and depositing movements in order to transfer the necessary articles, in accordance with each order, from the corresponding source pallet to the associated target pallets (Z₁-Z₁₀) ;
- a multiplicity of locations for the target pallets (Z₁-Z₁₀), each order being assigned at least one target pallet (Z₁-Z₁₀) with a packing formation which is predetermined in accordance with the order;
- an arrangement by way of which the source pallets (Q₁-Q₃) arranged in a predetermined sequence are displaced relative to the target pallets (Z₁-Z₁₀);
**characterized in that** the at least two gripping robots (R₁, R₂) operate simultaneously in overlapping regions which are separated by software control.

## Revendications

1. Procédé de préparation automatique en parallèle de plusieurs commandes en carton individuel, en couches, ou en plusieurs d'entre eux, dans lequel chaque commande est constituée par un nombre d'articles hétéroclites qui sont préparés par groupe d'articles sur au moins une palette source (Q₁ à Q₃) et qui doivent être disposés sur une palette cible (Z₁ à Z₁₀) assignée à la commande, avec les étapes consistant à :
a) pour chaque commande
- désigner au moins une palette cible (Z₁ à Z₁₀),
- déterminer les articles pour la palette cible (Z₁ à Z₁₀) désignée,
- élaborer un schéma d'emballage des articles pour la palette cible (Z₁ à Z₁₀), l'aptitude des articles à l'empilement étant prise en considération grâce par l'intermédiaire de critères d'empilement qui comprennent la disposition des articles en couche, les espaces libres dans la couche, la masse par unité de surface de la couche et différents poids,
b) préparer des palettes sources (Q₁ à Q₃) pour chaque article qui est requis pour au moins une commande,
c) définir une séquence de palettes sources (Q₁ à Q₃), qui est désignée à la condition marginale que
- soit déterminée, pour chaque palette cible (Z₁ à Z₁₀), la palette source (Q₁ à Q₃) qui est vide ou qui va devenir une palette entamée unique, et
- soit déterminé, pour chaque palette source (Q₁ à Q₃) non vidée, si elle va être utilisée par d'autres palettes cibles (Z₁ à Z₁₀),
d) définir les mouvements de levage et les mouvements de distribution d'au moins deux robots de préhension (R₁, R₂), pour transférer en fonction des commandes les articles requis des palettes sources (Q₁ à Q₃) correspondantes vers les palettes cibles (Z₁ à Z₁₀) assignées, lesdits au moins deux robots de préhension (R₁, R₂) travaillant de manière simultanée sur des secteurs qui se recouvrent et dont le partage est commandé par logiciel,
e) mettre en oeuvre les mouvements de levage et les mouvements de distribution définis pour les commandes par l'intermédiaire desdits au moins deux robots de préhension (R₁, R₂).

2. Procédé selon la revendication 1, **caractérisé en ce que** les articles sont transférés par couches des palettes sources (Q₁ à Q₃) vers une palette cible (Z₁ à Z₁₀) sélectionnée.

3. Procédé selon la revendication 1 ou 2, **caractérisé en ce que** la disposition des palettes cibles (Z₁ à Z₁₀) est optimisée, de sorte que des palettes cibles (Z₁ à Z₁₀) qui requiert des articles de même type, sont placées le loin plus possible l'une de l'autre.

4. Dispositif de préparation automatique en parallèle de plusieurs commandes en carton individuel, en couches, ou plusieurs d'entre eux, dans lequel chaque commande est constituée par un nombre d'articles hétéroclites qui sont préparés par groupe d'articles sur au moins une palette source (Q₁ à Q₃) et qui doivent être disposés sur au moins une palette cible (Z₁ à Z₁₀) assignée à la commande, en particulier pour la mise en oeuvre du procédé selon l'une des revendications 1 à 3, comprenant :
- au moins deux robots de préhension (R₁, R₂), qui effectue des mouvements de levage et des mouvements de distribution prédéfinis pour transférer en fonction de chaque commande les articles requis des palettes sources correspondantes vers les palettes cibles (Z₁ à Z₁₀) assignées,
- plusieurs emplacements pour les palettes cibles (Z₁ à Z₁₀), au moins une palette cible (Z₁ à Z₁₀) ayant un schéma d'emballage spécifié en fonction de la commande étant attribuée à chaque commande,
- un équipement, avec lequel les palettes sources (Q₁ à Q₃) rangées selon une séquence spécifiée sont traitées par rapport aux palettes cibles (Z₁ à Z₁₀),
**caractérisé en ce que**
les au moins deux robots de préhension (R₁, R₂) travaillent de manière simultanée sur des secteurs qui se recouvrent et dont la séparation est commandée par un logiciel.
